# EUROPÄISCHE PATENTSCHRIFT

(11) **EP 2 639 944 B1**
(45) Veröffentlichungstag und Bekanntmachung des Hinweises auf die Patenterteilung: **01.10.2014**
(21) Anmeldenummer: 12159622.5
(22) Anmeldetag: 15.03.2012
(51) Int. Cl.: H02K 11/00, H02K 5/18

(54) **Elektromotor**
Electric motor
Moteur électrique

(43) Veröffentlichungstag der Anmeldung: 18.09.2013
(73) Patentinhaber: Grundfos Holding A/S, 8850 Bjerringbro (DK)
(72) Erfinder: Mønster, Peter, 8900 Randers C (DK)
(74) Vertreter: Patentanwälte Vollmann & Hemmer

(56) Entgegenhaltungen:
- DE-A1- 2 405 014
- DE-A1-102004 027 744

## Beschreibung

Die Erfindung betrifft einen Elektromotor und ein Pumpenaggregat mit einem solchen Elektromotor als Antriebsmotor.

Es sind Elektromotoren bekannt, welche neben einem Statorgehäuse ein Elektronikgehäuse aufweisen, in welchem elektrische und elektronische Bauelemente zur Steuerung des Elektromotors angeordnet sind. Dies kann insbesondere ein Frequenzumrichter sein. Dabei ist es bekannt, ein solches Elektronikgehäuse bzw. einen solchen Klemmenkasten radialseitig zu dem Statorgehäuse an dessen Umfangswandung anzuordnen. Die elektrische Verbindung zwischen den elektronischen Bauteilen im Inneren des Elektronikgehäuses und dem Stator im Inneren des Statorgehäuses kann entweder durch Steckkontakte zwischen dem Statorgehäuse und dem Elektronikgehäuse oder aber durch eine Kabelverbindung erfolgen. Für eine solche Kabelverbindung ist es erforderlich, dass das Statorgehäuse in einer Umfangswandung eine erste Öffnung und das Elektronikgehäuse an einer dem Statorgehäuse zugewandten Wandung eine zweite Öffnung aufweist, durch welche sich elektrische Anschlussleitungen von den elektrischen bzw. elektronischen Bauteilen im Inneren des Elektronikgehäuses in das Innere des Statorgehäuses zu dem dort angeordneten Stator erstrecken.

Im Einzelfall ist es schwierig, die erste und die zweite Öffnung konstruktiv so anzuordnen, dass sie einander gegenüberliegen, sodass die elektrischen Anschlussleitungen durch die Öffnungen hindurch geführt werden können. Darüber hinaus muss die erste Öffnung an dem Statorgehäuse zweckmäßigerweise so angeordnet werden, dass bei der Montage des Stators die erforderlichen elektrischen Anschlussleitungen durch die Öffnung hindurch geführt werden können. Die Öffnung im Elektronikgehäuse muss darüber hinaus so platziert werden, dass die Anschlussleitungen im Inneren des Elektronikgehäuses dort mit den elektrischen bzw. elektronischen Bauteilen verbunden werden können. Alle diese Anforderungen gleichzeitig zu erfüllen, ist im Einzelfall schwierig.

DE 10 2004 027 744 A1 offenbart einen Elektromotor mit einem Elektronikkarsten, wobei der Elektromotor ein Motorgehäuse mit kreisförmigen Querschnitt aufweist. An einer Umfangsseite ist ein Klemmenkasten radialseitig an das Motorgehäuse angeformt. Der Klemmenkasten weist eine Adapterplatte auf, an welche außen ein Elektrönikkasten angesetzt werden kann.

DE 24 05 014 offenbart einen oberflächengekühlten elektrischen Motor, welche an einer Umfangsseite einen sich in Längsrichtung erstreckenden Kabelkanal aufweist, welcher zum Stator hin durch ein Gehäuseteil und nach außen hin durch einen Deckel verschlossen ist. Durch den Kabelkanal ist ein Kabel geführt, welches den Stator mit einem Klemmenkasten verbindet. Nachteilig bei dieser Ausgestaltung ist, dass der Kabelkanal durch einen separaten Deckel nach außen verschlossen werden muss.

Es ist Aufgabe der Erfindung, einen Elektromotor bereitzustellen, welcher eine einfachere elektrische Verbindung zwischen den elektronischen Bauteilen im Inneren eines Elektronikgehäuses und dem Stator im Inneren des Statorgehäuses ermöglicht und dabei eine einfache Montage ermöglicht.

Diese Aufgabe wird durch einen Elektromotor mit den in Anspruch 1 angegebenen Merkmalen sowie durch ein Pumpenaggregat mit einem solchen Elektromotor gemäß Anspruch 12 gelöst.

Bevorzugte Ausführungsformen ergeben sich aus den Unteransprüchen, der nachfolgenden Beschreibung sowie den beigefügten Figuren.

Der Erfindungsgemäße Elektromotor weist wie bekannte Elektromotoren ein Statorgehäuse auf, in dessen Inneren ein Stator des elektrischen Antriebsmotors angeordnet ist. Das Statorgehäuse kann bevorzugt als Gussbauteil, insbesondere aus Metall, wie beispielsweise Aluminium gefertigt sein. Radialseitig zu diesem Statorgehäuse ist ein Elektronikgehäuse angeordnet. D. h. das Elektronikgehäuse ist bezogen auf die Längs- bzw. Drehachse des Elektromotors radialseitig an einer Umfangswandung des Statorgehäuses bzw. befestigt. Dabei ist das Elektronikgehäuse vorzugsweise als separates Bauteil ausgebildet, welches an dem Statorgehäuse befestigt wird, beispielsweise an dem Statorgehäuse verschraubt wird. Alternativ ist es auch möglich, zumindest einzelne Wan dungen des Elektronikgehäuses einstückig mit dem Statorgehäuse auszubilden. In dem Elektronikgehäuse sind elektrische bzw. elektronische Bauteile zum Betrieb des Elektromotors angeordnet. Dies sind insbesondere Bauteile zur Steuerung des Elektromotors wie beispielsweise ein Frequenzumrichter.

Eine elektrische Verbindung zwischen den Bauteilen im Inneren des Elektronikgehäuses und dem Stator im Inneren des Statorgehäuses wird dabei durch elektrische Anschlussleitungen hergestellt. Diese elektrischen Anschlussleitungen sind durch eine erste Öffnung in einer Umfangswandung des Statorgehäuses und durch eine zweite Öffnung in einer Wandung des Elektronikgehäuses geführt. Die zweite Öffnung ist dabei in einer dem Statorgehäuse zugewandten Wandung des Elektronikgehäuses ausgebildet. Erfindungsgemäß liegen die erste und zweite Öffnung nicht gegenüberliegend bzw. übereinander, sondern sind versetzt zueinander angeordnet. Dabei ist zumindest ein Versatz in axialer Richtung vorgesehen. D. h. die erste und zweite Öffnung sind bezogen auf die Längs- bzw. Drehachse des Elektromotors in axialer Richtung voneinander beabstandet. Zusätzlich können die erste und die zweite Öffnung auch in Umfangsrichtung bezogen auf die Drehachse des Elektromotors versetzt sein. Um die elektrischen Anschlussleitungen trotz dieses axialen und gegebenenfalls umfänglichen Versatzes zwischen der ersten und zweiten Öffnung sicher führen zu können, ist erfindungsgemäß zwischen dem Statorgehäuse und dem Elektronikgehäuse ein Anschlusskanal ausgebildet, welcher die erste und die zweite Öffnung miteinander verbindet. Die elektrischen Anschlussleitungen erstrecken sich durch diesen Anschlusskanal hindurch von der ersten zu der zweiten Öffnung. Dadurch wird erreicht, dass die elektrischen Anschlussleitungen nicht offen zwischen dem Elektronikgehäuse und dem Statorgehäuse geführt werden müssen. Dadurch sind zum einen die Anschlussleitungen vor Beschädigungen geschützt. Zum anderen müssen in den Öffnungen keine Kabeldurchführungen mit Dichtungen und/oder Zugentlastungen montiert werden, um die Anschlussleitungen sicher halten zu können. Darüber hinaus ermöglicht der Versatz zwischen der ersten und der zweiten Öffnung, die erste und die zweite Öffnung jeweils für die Montage optimal platzieren zu können. So kann die erste Öffnung in dem Statorgehäuse so angeordnet werden, dass die Anschlussleitungen bei der Montage des Stators problemlos durch die erste Öffnung geführt werden können. Die erste Öffnung ist vorzugsweise nahe dem Axialende des Statorgehäuses, durch welches der Stator eingesetzt wird, angeordnet. Gleichzeitig kann die zweite Öffnung in dem Elektronikgehäuse so angeordnet werden, dass die Anschlussleitungen an geeigneter Stelle in das Elektronikgehäuse geführt sind, wo sie dann mit den dort vorhandenen elektrischen bzw. elektronischen Bauteilen, insbesondere zumindest einer Leiterplatte verbunden sind. D. h. es wird durch die versetzte Anordnung von erster und zweiter Öffnung eine große Freiheit bei der möglichen Gestaltung des Elektronikgehäuses erreicht, da die zweite Öffnung nicht direkt über der ersten Öffnung im Statorgehäuse angeordnet sein muss.

Die elektrischen Anschlussleitungen in dem Anschlusskanal können auf verschiedene Weise ausgebildet sein. So können die Anschlussleitungen als Kabel ausgebildet sein, wobei der Anschlusskanal dann einen Kabelkanal bildet. Darüber hinaus können die Anschlussleitungen auch als beliebige andere elektrische Leiter ausgebildet sein, beispielsweise als elektrische Leiter auf einer Leiterplatte oder als Metallstreifen, welche vorzugsweise in dem Anschlusskanal vergossen sind. Auch ist es möglich, dass die Anschlussleitungen mit einer oder mehreren Steckverbindungen versehen sind, beispielsweise im Bereich der ersten oder zweiten Öffnung. Solche Steckverbindungen können die Montage vereinfachen, da es dann nicht erforderlich ist, die Anschlussleitungen in einem Stück vom Inneren des Statorgehäuses in das Innere des Elektronikgehäuses zu führen. Vielmehr können die Anschlussleitungen mehrteilig ausgebildet werden und durch Steckverbindungen verbunden werden, beispielsweise wenn das Elektronikgehäuse an das Statorgehäuse angesetzt wird. Solche Steckverbindungen können beispielsweise an einem in den Anschlusskanal eingesetzten Einsatz ausgebildet sein.

Wenn lediglich ein axialer Versatz zwischen der ersten und der zweiten Öffnung vorgesehen ist, erstreckt sich der Anschlusskanal in axialer Richtung. Wenn zusätzlich ein umfänglicher bzw. tangentialer Versatz bezogen auf die Längsachse des Elektromotors vorgesehen ist, erstreckt sich der Anschlusskanal zwischen der ersten und zweiten Öffnung schräg oder bogenförmig bzw. schraubenförmig zur Längs- bzw. Drehachse des Elektromotors.

Der Anschlusskanal ist so ausgebildet, dass zumindest ein Abschnitt einer Wandung des Anschlusskanals von zumindest einer am Außenumfang des Statorgehäuses und/oder zumindest einer an einer dem Statorgehäuse zugewandten Außenwand des Elektronikgehäuses ausgebildeten Rippe gebildet wird. Eine solche Rippe steht bevorzugt radial vom Außenumfang des Statorgehäuses oder von der dem Statorgehäuse zugewandten Außenwand des Elektronikgehäuses vor. Alternativ können auch Rippen an beiden, d. h. an der Außenwand des Elektronikgehäuses und am Außenumfang des Statorgehäuses vorgesehen sein. Die vom Elektronikgehäuse vorstehende Rippe ist vorzugsweise auf das Statorgehäuse zu gerichtet, erstreckt sich somit bevorzugt im Wesentlichen in radialer Richtung oder tangentialer Richtung zu dem Statorgehäuse. Die Rippe ist bevorzugt einstückig mit der Außenwand des Elektronikgehäuses und/oder dem Statorgehäuse ausgebildet. Dies bietet sich insbesondere dann an, wenn das Elektronikgehäuse und/oder das Statorgehäuse als Gussbauteile, vorzugsweise aus Metall, wie beispielsweise Aluminium ausgebildet sind. Jedoch ist auch eine Ausbildung durch spanende Bearbeitung oder bei Verwendung anderer Materialien, wie beispielsweise Kunststoff möglich. Gemäß einer besonderen Ausführungsform kann die Rippe auch einstückig mit dem Elektronikgehäuse und dem Statorgehäuse ausgebildet sein und diese miteinander verbinden. Die Rippe ist vorzugsweise ein längliches und schmales Bauteil, welches die Form einer Wandung des Anschlusskanals hat. Dabei erstreckt die Rippe sich bevorzugt in axialer Richtung bezogen auf die Drehachse des Elektromotors. Die Rippe kann so eine axial gerichtete Seitenwandung des Anschlusskanals bilden, wenn dieser sich in axialer Richtung erstreckt. Die Rippe kann jedoch auch geneigt oder gekrümmt zu dieser Längsrichtung, d. h. der Richtung der Drehachse des Elektromotors erstreckt sein, je nach dem in welche in Richtung der Anschlusskanal gerichtet ist.

Besonders bevorzugt erstreckt sich die zumindest eine Rippe parallel zu zumindest einer Statorgehäuse oder am Elektronikgehäuse ausgebildeten Kühlrippe. Dies hat den Vorteil, dass die Rippe des Anschlusskanals einen Kühlluftstrom entlang der Kühlrippen nicht beeinträchtigt, da der Anschlusskanal so bevorzugt in dieselbe Richtung wie die Kühlrippen gerichtet ist. Besonders bevorzugt erstrecken sich sowohl die Kühlrippen als auch der Anschlusskanal in axialer Richtung bezogen auf die Drehachse des Elektromotors. Dies ermöglicht einen Kühlluftstrom ausgehend von einem am Axialende des Elektromotors angeordneten Lüfter in axialer Richtung entlang den Kühlrippen und entlang dem Anschlusskanal. Der Anschlusskanal bewirkt so eine Verbindung zwischen dem Elektronikgehäuse und dem Statorgehäuse, welche den Kühlluftstrom im Wesentlichen nicht beeinträchtigt, da vorzugsweise keine wesentlichen Elemente vorhanden sind, welche quer zum Kühlluftstrom gerichtet sind.

Besonders bevorzugt sind der Anschlusskanal und damit die zumindest eine Rippe seitlich des Hauptkühlluftstromes angeordnet. Ein Hauptkühlluftstrom strömt bevorzugt zwischen dem Elektronikgehäuse und dem Statorgehäuse durch einen dort vorhandenen Freiraum hindurch, um sowohl die Elektronik im Inneren des Elektronikgehäuses als auch den Stator zu kühlen. Der Anschlusskanal ist dabei bevorzugt in Umfangsrichfung bzw. in tangentialer Richtung zu einer Seite des Elektronikgehäuses hin versetzt angeordnet. So bildet der Anschlusskanal bevorzugt die seitliche Begrenzung einer Anordnung von Kühlrippen an dem Elektronikgehäuse quer zur Axialrichtung. D. h. der Anschlusskanal liegt bevorzugt an der Seite des zwischen Elektronikgehäuse und Statorgehäuse gebildeten Spaltes. So wird der Kühlluftstrom zwischen Statorgehäuse und Elektronikgehäuse durch den Anschlusskanal im Wesentlichen nicht beeinträchtigt.

Weiter bevorzugt hat die zumindest eine Rippe, welche eine Wandung des Anschlusskanals bildet, gleichzeitig die Funktion einer Kühlrippe. Dazu ist die Rippe wärmeleitend mit dem Statorgehäuse oder dem Elektronikgehäuse verbunden und bevorzugt einstückig mit der Wandung des Elektronikgehäuses und/oder einstückig mit dem Statorgehäuse, insbesondere aus Metall ausgebildet. So können die Wandungen des Anschlusskanals gleichzeitig die Funktion einer Kühlrippe übernehmen.

Erfindungsgemäß sind am Außenumfang des Statorgehäuses und/oder an einer dem Statorgehäuse zugewandten Außenwand des Elektronikgehäuses jeweils zwei in tangentialer Richtung bzw. umfänglicher Richtung voneinander beabstandete Rippen ausgebildet, welche zumindest Abschnitte von Seitenwandungen des Anschlusskanals bilden. Die Rippen erstrecken sich bevorzugt parallel zueinander und zwischen ihnen ist der Anschlusskanal ausgebildet. Die Rippen bilden somit die Seitenwandungen des Anschlusskanals, welcher sich bevorzugt in axialer Richtung erstreckt.

Die beiden Rippen sind an beiden Axialenden über jeweils eine Stirnwand miteinander verbunden. Die Stirnwände verschließen den Anschlusskanal so an den axialen Enden. Dabei sind die Stirnwände und die Seitenwandungen des Anschlusskanals, welche von Rippen gebildet werden, einstückig ausgebildet. Idealerweise sind diese Bauteile einstückig mit dem angrenzenden Statorgehäuse und/oder einstückig mit dem angrenzenden Elektronikgehäuse ausgebildet. So bilden die Rippen bzw. Seitenwandungen mit den Stirnwandungen einen Rahmen, welcher an seiner Unterseite von dem Statorgehäuse und an seiner Oberseite von dem Elektronikgehäuse verschlossen wird und so einen verschlossenen Anschlusskanal bilden kann.

Gemäß einer besonderen Ausführungsform der Erfindung ist am Außenumfang des Statorgehäuses und an einer dem Statorgehäuse zugewandten Außenwand des Elektronikgehäuses jeweils zumindest eine Rippe ausgebildet, wobei die Rippen einander derart gegenüberliegen, dass sie gemeinsam zumindest einen Abschnitt einer Wandung des Anschlusskanals bilden. D. h. die gegenüberliegenden Rippen erstrecken sich bevorzugt in einer Ebene aufeinander zu und grenzen mit ihren Stirnkanten aneinander an. Dabei können sich die Stirnkanten direkt berühren oder eine zwischenliegende Dichtung aufweisen. Bei dieser Ausführungsform sind somit Teile der Seitenwandungen und gegebenenfalls Stirnwandungen des Anschlusskanals sowohl am Elektronikgehäuse als auch am Statorgehäuse ausgebildet und diese Teile grenzen mit ihren Stirnkanten aneinander an. Alternativ können auch Abschnitte der Wandungen, welche am Elektronikgehäuse ausgebildet sind, mit Abschnitten der Wandungen, welche am Statorgehäuse ausgebildet sind, zahnartig ineinander greifen. Alternativ können die Seitenwandungen und gegebenenfalls Stirnwandungen des Anschlusskanals nur an einem Bauteil, d. h. beispielsweise nur am Statorgehäuse ausgebildet sein, sodass das Elektronikgehäuse lediglich die offene Seite des Anschlusskanals nach Art eines Deckels verschließt.

Besonders bevorzugt bildet der Anschlusskanal eine elektromagnetische Abschirmung für die im Inneren des Anschlusskanals gelegenen Anschlussleitungen. Dies ist insbesondere dann von Vorteil, wenn in dem Elektronikgehäuse ein Frequenzumrichter zur Steuerung des Elektromotors angeordnet ist. Die vom Frequenzumrichter erzeugten Signale, welche über die Anschlussleitungen zu dem Stator übertragen werden, können unerwünschte elektromagnetische Störungen verursachen, welche so durch den Anschlusskanal nach außen abgeschirmt werden. Dazu sind die Seitenwandungen des Anschlusskanals, welche vorzugsweise von den vorangehend beschrieben Rippen beschrieben werden, bevorzugt aus Metall, beispielsweise aus Aluminium ausgebildet.

In Inneren des Anschlusskanals kann ein Einsatz aus Kunststoff angeordnet sein, in welchem die Anschlussleitungen geführt sind. Ein solcher Einsatz kann insbesondere der elektrischen Isolation dienen.

Der Anschlusskanal kann bevorzugt als eine Rinne am Außenumfang des Statorgehäuses oder an einer dem Statorgehäuse zugewandten Außenwand des Elektronikgehäuses ausgebildet sein, wobei die Rinne durch einen Deckel verschlossen ist. Die Rinne wird bevorzugt von zwei sich in axialer Richtung erstreckenden Seitenwandungen gebildet. Diese Seitenwandungen können als Rippen in der oben beschrieben Form ausgebildet sein. Stirnseitig ist die Rinne bevorzugt durch Stirnwände, welche die Rippen miteinander verbinden, in der oben beschrieben Weise verschlossen. Die Unterseite der Rinne wird vom Außenumfang des Statorgehäuses oder von der Außenwandung des Elektronikgehäuses gebildet, je nach dem an welchem Bauteil die Rinne gelegen ist. Die Oberseite der Rinne wird durch den genannten Deckel verschlossen. Durch den Deckel kann so ein geschlossener Anschlusskanal gebildet werden, in dessen Inneren die Anschlussleitungen geführt sind. Bevorzugt ist an dem Deckel ein zum Inneren des Anschlusskanals geöffneter Rohrabschnitt ausgebildet, welcher sich in die erste oder zweite Öffnung hinein erstreckt. Besonders bevorzugterstreckt sich der Rohrabschnitt in die zweite Öffnung an dem Elektronikgehäuse hinein. Diese Ausgestaltung kommt insbesondere dann zur Anwendung, wenn die Rinne, welche den Anschlusskanal bildet, am Außenumfang des Statorgehäuses ausgebildet ist. Der Deckel kann dann den Anschlusskanal verschließen und die Anschlussleitungen können durch den Rohrabschnitt aus dem Anschlusskanal hinaus durch die zweite Öffnung in das Elektronikgehäuse geführt werden. Dadurch, dass der Rohrabschnitt sich in die zweite Öffnung hinein erstreckt, wird so eine geschlossene Verbindung vom Inneren des Elektronikgehäuses bis in das Innere des Statorgehäuses geschaffen. Der Anschlusskanal ist so nach außen verschlossen bzw. abgedichtet, sodass beispielsweise ein Eindringen von Feuchtigkeit verhindert werden kann.

Weiter bevorzugt ist der Anschlusskanal durch zumindest eine zwischen dem Elektronikgehäuse und dem Statorgehäuse angeordnete Dichtung nach außen abgedichtet. Die Dichtung ist vorzugsweise aus einem Elastomermaterial gebildet und kommt an dem Elektronikgehäuse und dem Statorgehäuse so zur Anlage, dass der Anschlusskanal nach außen abgedichtet wird. Dabei kann die Dichtung insbesondere an den freien Stirnkanten der Seitenwandungen und Stirnwandungen des Anschlusskanals, welche von den oben beschrieben Rippen gebildet sein können, dichtend anliegen. Besonders bevorzugt ist die Dichtung einstückig mit einem den Anschlusskanal verschließenden Deckel oder einem in dem Anschlusskanal angeordneten Einsatz ausgebildet. So können auch der Deckel oder der Einsatz selber die Dichtung bilden, wenn sie aus einem geeigneten Elastomermaterial gebildet sind. Alternativ kann eine Dichtung an dem Deckel befestigt oder beispielsweise im Zweikomponentenspritzguss an diesen angegossen sein.

Besonders bevorzugt ist der Elektromotor gemäß der vorangehenden Beschreibung Teil eines Pumpenaggregates. D. h. er bildet den Antriebsmotor des Pumpenaggregates. Dazu kann der Elektromotor beispielsweise über eine Kupplung mit der Antriebswelle des Pumpenaggregates verbunden sein. Gegebenenfalls können auch die Rotorwelle des Elektromotors und die Welle des Pumpenaggregates einteilig ausgebildet sein. Entsprechend ist auch ein solches Pumpenaggregat mit einem Antriebsmotor, welcher in Form des vorangehend beschrieben Elektromotors ausgebildet ist, Gegenstand der Erfindung.

Nachfolgend wir die Erfindung beispielhaft anhand der beigefügten Figuren beschrieben:

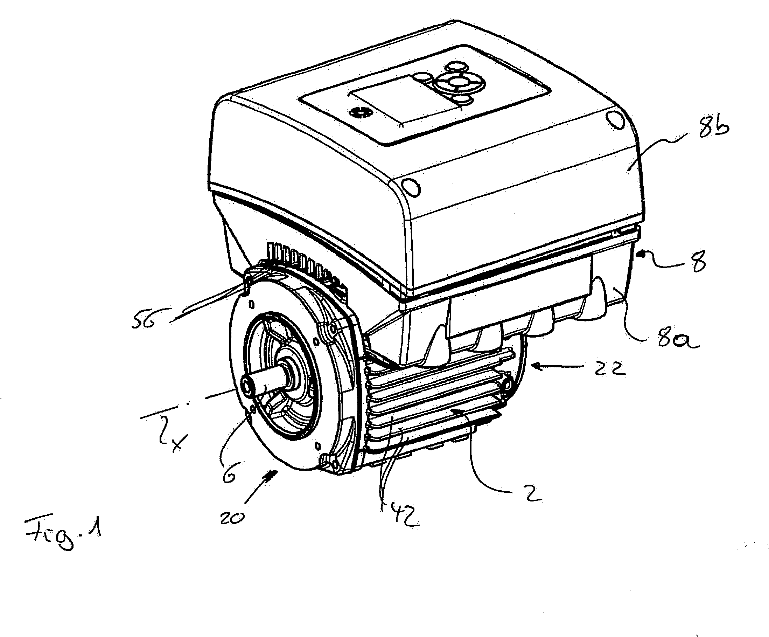

- Fig. 1: eine perspektivische Gesamtansicht eines erfindungsgemäßen Elektromotors,

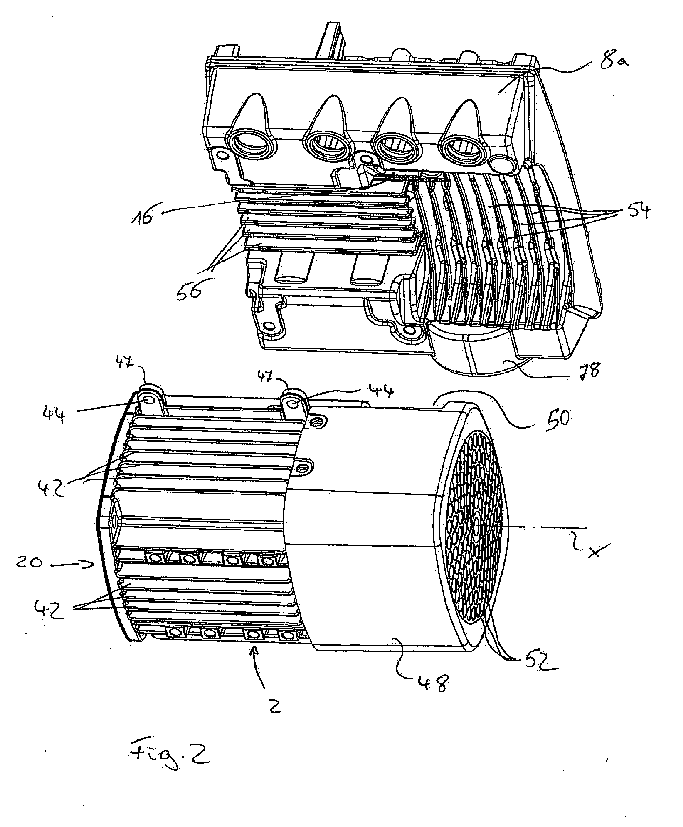

- Fig. 2: eine Ansicht des Elektromotors gemäß Fig. 1 mit vom Statorgehäuse getrennten Elektronikgehäuse,

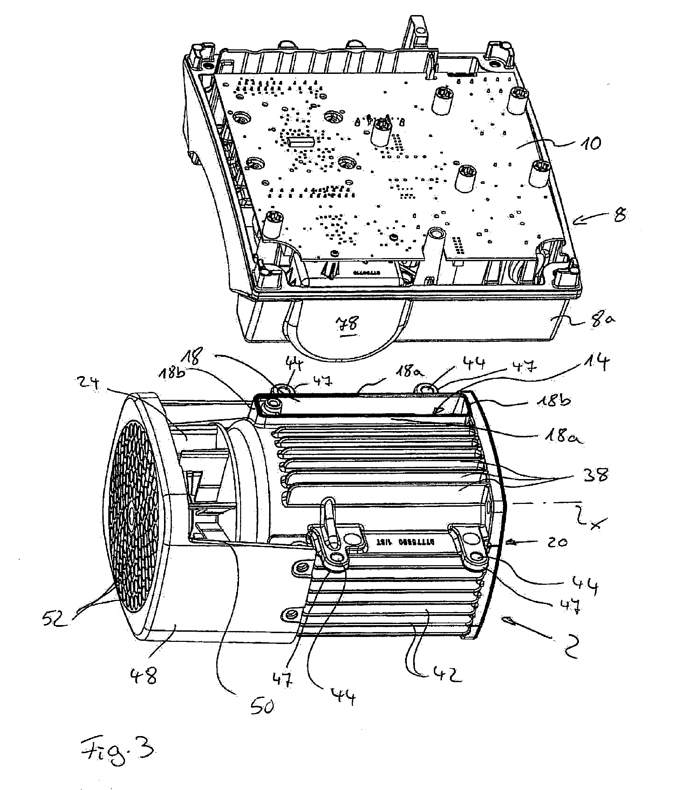

- Fig. 3: eine perspektivische Ansicht der Anordnung gemäß Fig. 2 von der Oberseite des Elektronikgehäuses her gesehen,
- Fig. 4.: eine perspektivische Ansicht des Statorgehäuses mit angebrachtem Unterteil eines Elektronikgehäuses,
- Fig. 5: eine perspektivische Ansicht des Statorgehäuses mit abgenommenem Deckel eines Kabelkanals,
- Fig. 6: das Statorgehäuse gemäß Fig. 5 mit eingesetztem Stator,
- Fig. 7: das Statorgehäuse gemäß Fig. 6 mit auf dem Kabelkanal aufgesetztem Deckel,
- Fig. 8: das Statorgehäuse gemäß Fig. 7 mit noch nicht aufgesetztem Unterteil des Elektronikgehäuses,
- Fig. 9: eine Ansicht von unten des Statorgehäuses mit aufgesetztem Elektronikgehäuse,
- Fig. 10: eine Draufsicht auf die Unterseite des Elektronikgehäuses bei abgenommenem Statorgehäuse,
- Fig. 11: eine Draufsicht auf das Unterteil des Elektronikgehäuses von dessen Innenseite her und
- Fig. 12: ein Blockdiagramm der wesentlichen elektronischen Bauteile in dem Elektronikgehäuse.

Der erfindungsgemäße Elektromotor, welcher in den Figuren gezeigt ist, weist ein Statorgehäuse 2 auf, in welchem ein Stator 4 mit einem dessen Inneren drehbaren Rotor mit einer Rotorwelle 6 angeordnet ist. Die Rotorwelle 6 steht in Richtung der Drehachse X aus dem Statorgehäuse 2 zum Anschluss an externe Komponenten, beispielsweise ein Pumpenaggregat vor. Radialseitig bezogen auf die Drehachse X ist am Außenumfang des Statorgehäuses 2 ein Elektronikgehäuse 8 angeordnet. Das Elektronikgehäuse 8 ist aus zwei Teilen, einem Unterteil 8a und einem Deckel 8b gebildet. Das Unterteil 8a ist mit seiner Unterseite an die Umfangsseite des Statorgehäuses 2 angesetzt. Die dem Statorgehäuse 2 abgewandte Oberseite des Unterteils 8a ist durch den Deckel 8b verschlossen. Das Statorgehäuse 2 und das Unterteil 8a des Elektronikgehäuses 8 und vorzugsweise auch der Deckel 8b des Elektronikgehäuses sind bevorzugt aus Metall, beispielsweise Aluminiumdruckguss gefertigt.

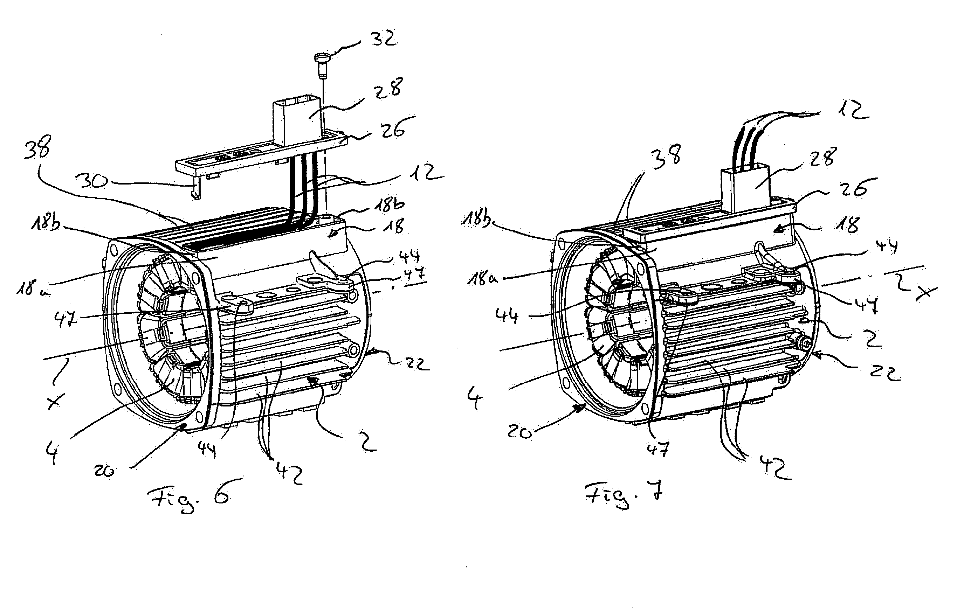

Da das Elektronikgehäuse 8 und das Statorgehäuse 2 zwei getrennte Bauteile darstellen, ist eine elektrische Verbindung zwischen dem Stator 4 im Inneren des Statorgehäuses 2 und den elektronischen Bauteilen, beispielsweise der Leiterplatte 10 im Inneren des Elektronikgehäuses 8 erforderlich. Bei der hier gezeigten erfindungsgemäßen Lösung erfolgt diese Verbindung durch elektrische Anschlussleitungen 12 (siehe Fig. 6 und 7). Um die elektrischen Anschlussleitungen 12 aus dem Inneren des Statorgehäuses 2 nach außen führen zu können, weist das Statorgehäuse 2 an seiner Umfangswandung eine radial gerichtete Öffnung 14 auf, welche eine erste Öffnung 14 bildet, durch welche die elektrischen Anschlussleitungen 12 geführt werden. Das Unterteil 8a des Elektronikgehäuses 8 weist eine zweite Öffnung 16 auf, durch welche sich elektrischen Anschlussleitungen 12 in das Innere des Elektronikgehäuses 8 hinein erstrecken.

Die erste Öffnung 14 in dem Statorgehäuse 2 und die zweite Öffnung 16 in dem Unterteil 8a des Elektronikgehäuses 8 sind in axialer Richtung X, d. h. in Richtung der Drehachse X versetzt bzw. beabstandet angeordnet. Verbunden sind die Öffnungen 14 und 16 dabei durch einen zwischen dem Statorgehäuse 2 und dem Elektronikgehäuse 8 ausgebildeten Anschlusskanal in Form eines Kabelkanals 18. Der Kabelkanal 18 wird durch zwei sich parallel zur Längsachse bzw. Drehachse X erstreckende Seitenwandungen 18a gebildet, welche an ihren Stirnenden in axialer Richtung X gesehen, durch jeweils eine Stirnwand 18b miteinander verbunden sind. Die Seitenwandungen 18a und die Stirnwände 18b bilden somit einen Rahmen, welcher sich von dem Außenumfang des Statorgehäuses 2 zu dem Elektronikgehäuse 8 hin erstreckt. Die Seitenwandungen 18a sind dabei in Form von Rippen ausgebildet, welche sich im Wesentlichen in radialer bzw. tangentialer Richtung vom Au-βenumfang des Statorgehäuses 2 weg und zu dem Unterteil 8a des Elektronikgehäuses 8 hin erstrecken. Dabei sind die Seitenwandungen 18a und die Stirnwände 18b einstückig mit dem Statorgehäuse 2 aus Metall geformt. Der Kabelkanal 18, welcher so am Außenumfang des Statorgehäuses 2 ausgebildet ist, bildet so eine zum Elektronikgehäuse 8 hin geöffnete Rinne. Die erste Öffnung 14 mündet an einem Axialende in den Kabelkanal 18 hinein. Dies ist dasjenige Axialende, welches der offenen Axialseite 20 des Statorgehäuses zugewandt ist. Dies ist die erste Axialseite 20, an welcher sich die Rotorwelle 6 nach außen erstreckt und durch welche der Stator 4 in das Statorgehäuse 2 eingesetzt wird. An der entgegengesetzten zweiten Axialseite 22 ist an der Außenseite des Statorgehäuses 2 ein mit der Rotorwelle 6 verbundenen Lüfter 24 angeordnet. Die Anordnung der ersten Öffnung 14 möglichst nahe zu der ersten Axialseite 20, durch welche der Stator 4 in das Statorgehäuse 2 eingesetzt wird, hat den Vorteil, dass beim Einsetzen des Stators 4 die elektrischen Anschlussleitungen 12 leicht durch die Öffnung 14 nach außen, d. h. in das Innere des Kabelkanals 18 geführt werden können.

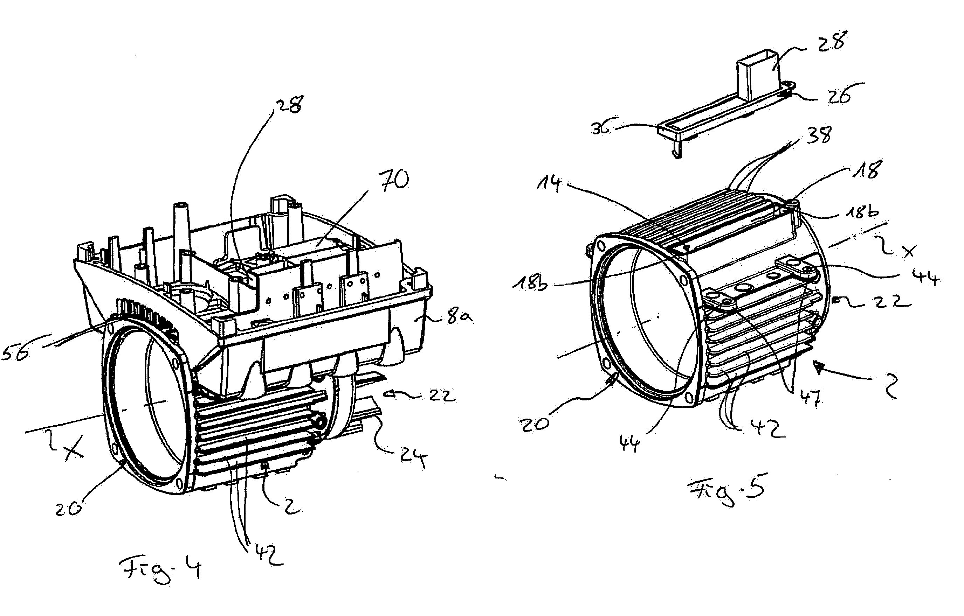

Die zweite Öffnung 16, welche im Unterteil 8a des Elektronikgehäuses 8 in einer dem Statorgehäuse 2 zugewandten Außenwand ausgebildet ist, ist so gelegen, dass sie, wenn das Elektronikgehäuse 8 mit dem Statorgehäuse 2 verbunden ist, ebenfalls dem Kabelkanal 18 gegenüberliegt, jedoch in der Nähe des axialen Endes des Kabelkanals 18, welches der zweiten Axialseite 22 des Statorgehäuses 2 zugewandt ist. Der zum Elektronikgehäuse 8 hin offene Kabelkanal 18 wird nach Einlegen der elektrischen Anschlussleitungen 12 durch einen Deckel 26 verschlossen. Der Deckel 26 weist der zweiten Öffnung 16 gegenüberliegend, d. h. an seinem der zweiten Axialseite 22 des Stators 2 zugewandten Axialende einen Rohrabschnitt 28 auf, welcher zum Inneren des Kabelkanals 18 hin geöffnet ist und sich von dem Kabelkanal 18 weg erstreckt. Der Rohrabschnitt 28 weist hier einen rechteckigen Querschnitt auf, kann jedoch gegebenenfalls auch eine andere Querschnittsform aufweisen. Dabei ist die Querschnittsform des Rohrabschnittes 28 bevorzugt an die Form der zweiten Öffnung 16 angepasst, welche in diesem Ausführungsbeispiel ebenfalls rechteckig ist. Der Rohrabschnitt 28 weist eine äußere Querschnittsform und -größe auf, welche geringfügig kleiner als der Querschnitt der zweiten Öffnung 16 sind. Ferner weist der Rohrabschnitt 28, welcher sich ausgehend von dem Kabelkanal 18 auf die Unterseite des Unterteils 8a des Elektronikgehäuses zu erstreckt, eine solche Länge auf, dass er, wenn das Unterteil 8a des Elektronikgehäuses 8 an dem Statorgehäuse 2 befestigt ist, durch die Öffnung 16 in das Innere des Elektronikgehäuses 8 hineinragt, wie beispielsweise in Fig. 4 zu erkennen ist.

Der Deckel 26 wird an dem Kabelkanal 18 in diesem Ausführungsbeispiel durch ein Rastelement 30 sowie eine Schraube 32 fixiert. Der Deckel 26 liegt an seinem Außenumfang auf der freien Stirnkante der Seitenwandungen 18a und der Stirnwände 18b des Kabelkanals 18 dichtend auf. Gleichzeitig kommt der Deckel 26 mit seiner dem Kabelkanal 18 abgewandten Oberseite bei aufgesetztem Elektronikgehäuse 8 an einer rechteckigen rahmenförmigen Anlagefläche 34 an dem Unterteil 8a dichtend zur Anlage. Die Anlagefläche 34 ist an der dem Statorgehäuse 2 zugewandten Wandung bzw. Unterseite des Unterteils 8a ausgebildet und weist eine Form auf, welche der von den Seitenwandungen 18a und den Stirnwänden 18b des Kabelkanals 18 gebildeten Kontur entspricht. Die Anlagefläche 34 ist vorzugsweise direkt am Unterteil 18a angeformt. Die zweite Öffnung 16 liegt im Inneren dieser rahmenförmigen Anlagefläche 34.

Damit der Deckel 26 gleichzeitig als Dichtung fungieren kann, welche den Kabelkanal 18 zwischen Statorgehäuse 2 und Elektronikgehäuse 8 nach außen hin abdichtet, ist entweder der gesamte Deckel aus einem entsprechend elastischen Material, vorzugsweise einem elastischen Kunststoffmaterial ausgebildet oder weist lediglich an seinem Außenumfang einen elastischen Wulst 36 auf, welcher beispielsweise aus einem Elastomermaterial direkt an den übrigen Teil des Deckels angegossen ist.

Nachdem die Anschlussleitungen 12, wie in Fig. 6 gezeigt, in den Kabelkanal 18 eingelegt sind, wird der Deckel 26 aufgesetzt und mittels des Rastelementes 30 und der Schraube 32 fixiert, wobei die Anschlussleitungen 12 durch den Rohrabschnitt 28 nach außen geführt werden. Anschließend wird das Unterteil 8a des Elektronikgehäuses 8 an dem Statorgehäuse 2 in der weiter unten beschrieben Weise befestigt, wobei die elektrischen Anschlussleitungen 12 durch die Öffnung 16 in das Innere des Elektronikgehäuses 8 geführt werden und der Rohrabschnitt 28 in die Öffnung 16 eingreift und in das Innere des Elektronikgehäuses 8 hineinragt.

Wenn der Kabelkanal 18 mit seinen Seitenwandungen 18a und den Stirnwänden 18b vollständig aus Metall ausgebildet wird und auch an seiner Oberseite durch das metallische Unterteil 8a des Elektronikgehäuses 8 geschlossen wird, sind die Wandungen des Kabelkanals 18 vollständig aus Metall ausgebildet und bilden so eine Abschirmung für die elektrischen Anschlussleitungen 12. Dies ist insbesondere deshalb wichtig, da in dem Elektronikgehäuse 8 ein Frequenzumrichter angeordnet ist, welcher den Motor bzw. den Stator 4 ansteuert. Die Ausgangssignale des Frequenzumrichters, welche über die elektrischen Anschlussleitungen 12 übertragen werden, können elektromagnetische Störsignale erzeugen, welche so durch die metallischen Wandungen des Kabelkanals 18 nach außen abgeschirmt werden.

An der dem Elektronikgehäuse 8 zugewandten Außenseite des Statorgehäuses 2 ist eine Anordnung von Kühlrippen 38 ausgebildet.

Die Seitenwandungen 18a des Kabelkanals 18 erstrecken sich in axialer Richtung parallel zu den Kühlrippen 38. Die Kühlrippen 38 erstrecken sich parallel zur Längs- bzw. Drehachse X und parallel zueinander. D. h. die mittleren Kühlrippen erstrecken sich im Wesentlichen radial zur Längsachse X von der Umfangswandung des Statorgehäuses 2 weg, während sich die äußeren Kühlrippen parallel hierzu ebenfalls im Wesentlichen radial und tangential erstrecken. Die Kühlrippen 38 erstrecken sich ausgehend von dem Statorgehäuse 2 zu dem Elektronikgehäuse 8 hin. Das Elektronikgehäuse 8 ist von der Außenseite des Statorgehäuses 2 so angeordnet, dass ein Freiraum zwischen Statorgehäuse 2 und Elektronikgehäuse 8 verbleibt, in welchem die Kühlrippen 38 an dem Statorgehäuse 2 sowie gegenüberliegende Kühlrippen 56 gelegen sind, welche an der dem Statorgehäuse 2 zugewandten Wandung des Unterteils 8a des Elektronikgehäuses 8 ausgebildet sind. Der Kabelkanal 18 ist an einer Seite der Anordnung von Kühlrippen 38 gelegen. Die Kühlrippen 38 sind wie die Seitenwandungen 18a des Kabelkanals 18 einstückig mit dem Statorgehäuse 2 aus Metall ausgebildet. Dadurch, dass der Kabelkanal 18 an der Seite der Anordnung von Kühlrippen 38 gelegen ist und sich im Übrigen parallel zu den Kühlrippen 38 erstreckt, beeinträchtigt der Kabelkanal 18 den Kühlluftstrom durch die Anordnung von Kühlrippen 38 im wesentlichen nicht. Vielmehr haben auch die Seitenwandungen 18a des Kabelkanals 18 die Wirkung von Kühlrippen und unterstützen so die Kühlung des Statorgehäuses 2 an der dem Klemmenkasten bzw. Elektronikgehäuse 8 zugewandten Seite. An den übrigen Umfangs- bzw. Seitenflächen des Statorgehäuses 2 sind weitere Kühlrippen 42 in bekannter Weise angeordnet.

Die Befestigung des Elektronikgehäuses 8 am Statorgehäuse 2 erfolgt durch Schrauben, welche durch Befestigungsausnehmungen 44 hindurch von unten in das Unterteil des Elektronikgehäuses 8 eingreifen. Dazu sind an dem Unterteil des Elektronikgehäuses Gewindelöcher 46 ausgebildet. Die Befestigungsausnehmungen bzw. Befestigungslöcher 44 sind in sich seitlich von dem Statorgehäuse 2 wegerstreckenden Laschen 47 ausgebildet. So sind die Befestigungspunkte, an welchen das Elektronikgehäuse 8 mit dem Statorgehäuse 2 verbunden ist, seitlich und außerhalb der Anordnung von Kühlrippen 38 gelegen. So wird der Kühlluftstrom zwischen dem Elektronikgehäuse 8 und dem Statorgehäuse 2 durch diese Befestigungselemente nicht beeinträchtigt, da die Schrauben, welche sich durch die Befestigungsausnehmungen 44 hindurch in die Gewindelöcher 36 erstrecken, außerhalb dieses Kühlluftstroms gelegen sind.

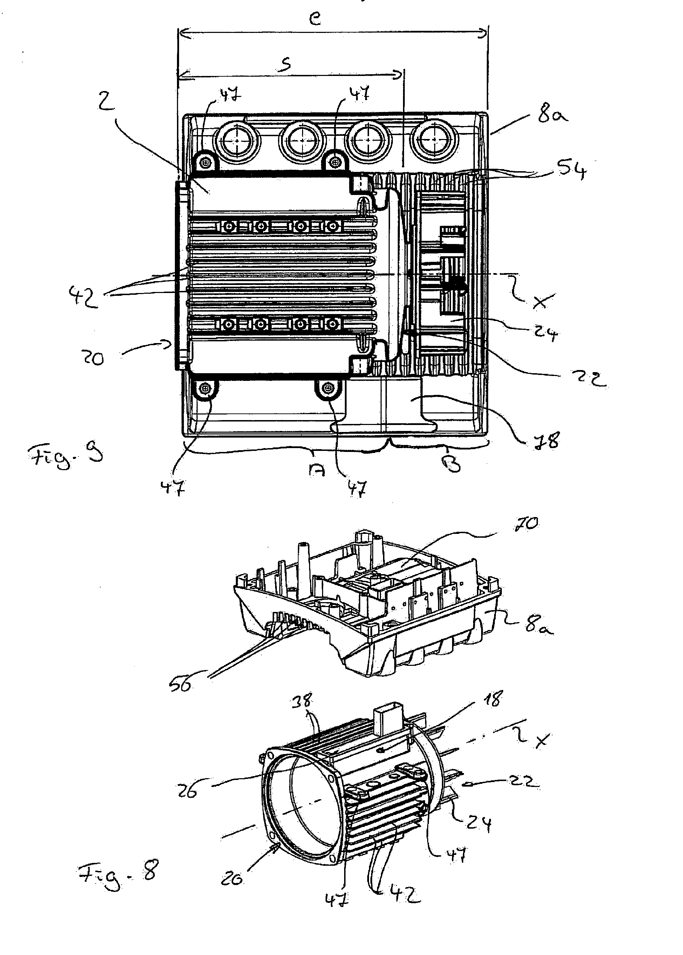

Wie in Fig. 9 besonders gut zu erkennen ist, weist das Statorgehäuse 2 eine axiale Länge s auf, welche kleiner ist als die axiale Länge e des Elektronikgehäuses 8. Das Elektronikgehäuse 8 überragt somit die Axialseite 22 des Statorgehäuses 2 in axialer Richtung. Das Elektronikgehäuse 8 weist somit zwei Abschnitt A und B auf, wobei ein erster Abschnitt A des Elektronikgehäuses 8 radialseitig des Statorgehäuses 2 gelegen ist. Der Abschnitt B ist derjenige Abschnitt des Elektronikgehäuses, welcher das Statorgehäuse 2 in axialer Richtung überragt. Der Abschnitt B ist dabei radialseitig des Lüfters 24 gelegen, welcher axialseitig der zweiten Axialseite 22 des Statorgehäuses 2 gelegen ist.

Der Lüfter 24 ist von einer Abdeckung in Form einer Abdeckkappe 48 umgeben. Die Abdeckkappe 48 schließt an die Außenumfangsfläche des Statorgehäuses 2 an und ist an ihrer Umfangsseite geschlossen ausgebildet. Lediglich an der dem Elektronikgehäuse 8 zugewandten Umfangsseite ist eine Aussparung 50 ausgebildet. An der Axialseite der Abdeckkappe 48, welche dem Statorgehäuse 2 abgewandt sind, sind Lufteintrittsöffnungen 52 ausgebildet. Der Lüfter 24, welcher von der Rotorwelle 6 angetrieben wird, saugt Luft durch die Lufteintrittsöffnungen 52 in axialer Richtung an und drückt diese Luft in radialer Richtung in den Umfangsbereich des Lüfters 24, radial gegen die Innenseite der Kappe 48. Dabei wird die Luft so umgelenkt, dass sie in die Freiräume zwischen den Kühlrippen 42 geleitet wird und so axialseitig im Umfangsbereich des Statorgehäuses 2 austritt und entlang der Kühlrippen 42 strömt.

Im Bereich des Aussparung 50 tritt die Luft aus dem Lüfter 24 in radialer Richtung gegen die Unterseite des Unterteils 8a des Elektronikgehäuses 8 aus. Das ist die Unterseite des Abschnittes B des Elektronikgehäuses 8. Die Unterseite bildet einen ersten Wandungsabschnitt, an welchem Kühlrippen 54 ausgebildet sind, welche sich bezogen auf die Drehachse X in tangentialer Richtung bzw. Umfangsrichtung erstrecken. Ein radial austretender Kühlluftstrom sowie auch mögliche tangentiale Kühlluftstromkomponenten, welche aus dem Lüfter 24 austreten, strömen so in diesem Bereich zunächst in Umfangsrichtung entlang der Kühlrippen 54. In diesem Bereich tritt die Kühlluft darüber hinaus in den Spalt zwischen Elektronikgehäuse 8 und Statorgehäuse 2 ein, in welchem die Kühlrippen 38 an der dem Elektronikgehäuse 8 zugewandten Außenseite des Statorgehäuses 2 gelegen sind. Dieser Spalt ist somit zwischen dem ersten Abschnitt A und des Elektronikgehäuses 8 und dem Statorgehäuse 2 gelegen. In diesem Abschnitt A sind an der Unterseite des Unterteils 8a des Elektronikgehäuses 8, welcher einen zweiten Wandungsabschnitt bildet, Kühlrippen 56 ausgebildet, welche sich in axialer Richtung parallel zur Drehachse X erstrecken. Die Kühlrippen 56 erstrecken sich ausgehend von der Unterseite des Unterteils 8a des Elektronikgehäuses 8 in Richtung des Statorgehäuses 2. Dabei sind die Kühlrippen 56 den Kühlrippen 38 an der Seite des Statorgehäuses 2 entgegengesetzt und vorzugsweise gegenüberliegend angeordnet. Der Kühlluftstrom strömt somit in diesem Bereich der Kühlrippen 38 und der Kühlrippen 56 axial durch den Freiraum zwischen dem ersten Abschnitt A des Elektronikgehäuses 8 und dem Statorgehäuse 2 hindurch und tritt aus diesem Spalt an der ersten Axialseite 20 des Statorgehäuses 2 aus.

Die Kühlrippen 54 und 56 an der dem Statorgehäuse 2 zugewandten Unter- bzw. Außenseite des Elektronikgehäuses 8 dienen der Kühlung des Elektronikgehäuses und damit der im Inneren des Elektronikgehäuses angeordneten elektronischen Bauteile. Dabei sind die elektronischen Bauteile, welche die meiste Abwärme erzeugen, an der Innenseite des Unterteils 8a des Elektronikgehäuses 8 in dem zweiten Abschnitt B gelegen, welcher radialseitig des Lüfters 24 gelegen ist und an seiner Außenseite mit den Kühlrippen 54 versehen ist, welche sich in Umfangsrichtung bzw. tangentialer Richtung erstrecken. Die elektronischen Bauteile, welche die meiste Abwärme erzeugen, sind ein Wechselrichter 58 sowie ein Gleichrichter 60 eines Frequenzumrichters, welcher in dem Elektronikgehäuse 8 angeordnet sind. Der Wechselrichter 58 enthält die Leistungsschalter des Frequenzumformers und ist dasjenige Bauteil, welches gemeinsam mit dem Gleichrichter 60 die meiste Abwärme erzeugt. Der Wechselrichter 58 und der Gleichrichter 60 liegen an Anlageflächen 70 an der Innenseite des metallischen Unterteils 8a des Elektronikgehäuses 8 wärmeleitend an. Dazu kann zwischen der Anlagefläche 70 und dem Wechselrichter 58 sowie dem Gleichrichter 60 zusätzliche wärmeleitende Verbindung, beispielsweise durch wärmeleitende Klebstoffe oder sonstige wärmeleitende Stoffe geschaffen sein.

Dasjenige elektronische Bauteil, was die zweitmeiste Abwärme im Inneren des Elektronikgehäuses 8 erzeugt, ist in diesem Ausführungsbeispiel eine Spule 72, welche als Entstörspule (CMC, Common Mode Choke) dient. Dieses Bauteil ist im ersten Abschnitt A über den Kühlrippen 56 an der Innenseite des Unterteiles 8a des Elektronikgehäuses angeordnet. Auch die Spule 72 befindet sich in wärmeleitender Verbindung mit der Innenfläche der Unterseite des Unterteils 8a des Elektronikgehäuses 8. Dadurch, dass der Wechselrichter 58 und der Gleichrichter 60 in dem zweiten Abschnitt B über dem in Umfangsrichtung gerichteten Kühlrippen 54 gelegen sind, werden diese durch den in radialer Richtung gerichteten und durch die Kühlrippen 54 in Umfangsrichtung umgelenkten Kühlluftstrom, welcher direkt aus dem Lüfter 24 austritt am stärksten gekühlt. Die im weiteren Strömungsverlauf dann durch die Kühlrippen 56 strömende Lüft kühlt dann den Bereich, in dem dasjenige elektronische Bauteil gelegen ist, was die zweitmeiste Abwärme erzeugt, nämlich die Spule 72, sodass auch diese optimiert gekühlt wird.

Zwischen dem Bereich des Elektronikgehäuses 8, in welchem die Spule 72 gelegen ist und dem übrigen Innenraum des Unterteils des Elektronikgehäuses 8 ist eine metallische Trennwand 74 gelegen, welche der elektromagnetischen Abschirmung dient.

Ein weiteres elektronisches Bauteil, welches Abwärme erzeugt, nämlich die Spule 76 ist in einer seitlichen Tasche 78 gelegen, welche in dem Unterteil 8a des Elektronikgehäuses 8 ausgebildet ist. Dies Spule 76 ist eine Spule zur Blindstrom-Kompensation (Power factor correction coil). Auch dieses Bauteil erzeugt Abwärme. Um dieses Bauteil optimal kühlen zu können, ist die Tasche 78 an der Außenseite des Elektronikgehäuses 8 in dem Bereich des Elektronikgehäuses 8 gebildet, welcher das Statorgehäuse 2 in radialer Richtung überragt. Wie in Fig. 9 zu erkennen ist, liegt die Tasche 78 stirnseitig der Kühlrippen 54 im Bereich des Abschnitts B oder direkt angrenzend an den Abschnitt B des Elektronikgehäuses 8. Durch die umfänglich bzw. tangential zur Drehachse X gerichteten Kühlrippen 54 wird ein tangential gerichteter Kühlluftstrom in diesem Bereich erzeugt, welcher so direkt die Außenwandung der Tasche 78 anströmt, sodass auch dieser Bereich besonders bevorzugt gekühlt wird. Die Tasche 78 ist an die Außenform der Spule 76 angepasst ist, sodass in diesem Bereich ein möglichst großflächiger Wärmeübergang von der Spule 76 auf die Wandung der Tasche 78 und damit die Außenwandung des Elektronikgehäuses 8 bzw. des Unterteils 8a des Elektronikgehäuses 8 erreicht wird.

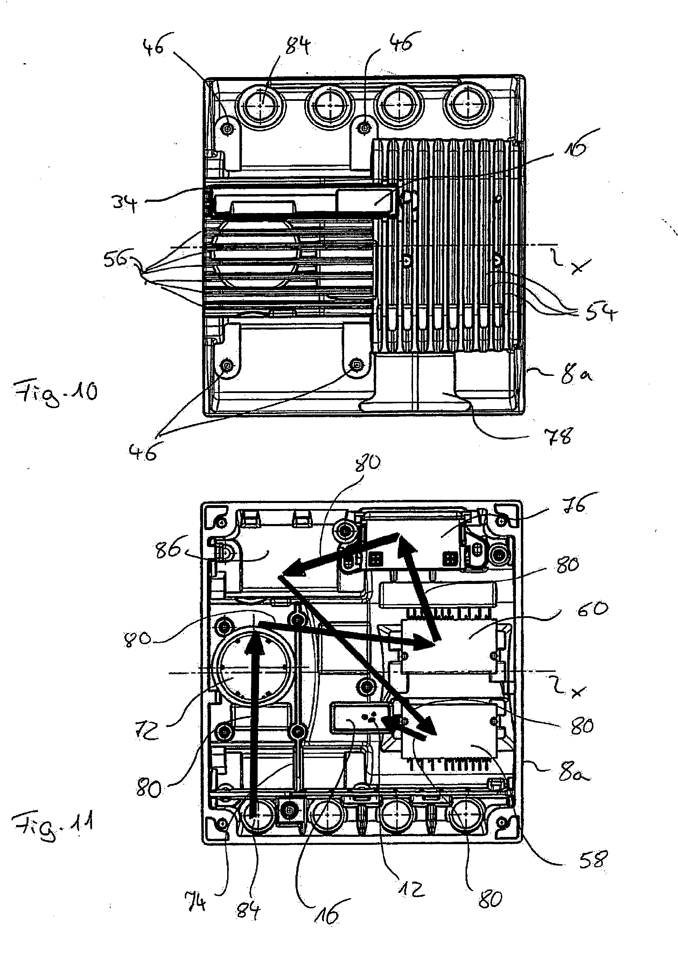

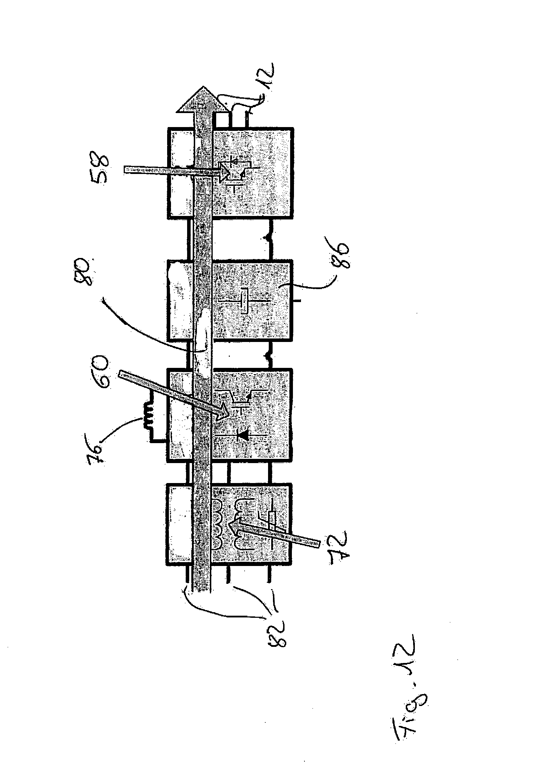

Anhand von Fig. 11 und Fig. 12 wird noch einmal erläutert, wie die wesentlichen elektronischen Bauteile des Frequenzumrichters, welche in dem Unterteil 8a des Elektronikgehäuses 8 angeordnet sind, zusammenwirken. In Fig. 11 und Fig. 12 wird der Leistungsfluss zwischen den einzelnen Bauteilen durch Pfeile 80 gekennzeichnet. Die elektrische Leistung tritt durch eine Netzanschlussleitung 82, welche durch die Kabeldurchführung 84 in das Innere des Elektronikgehäuses 8 geführt ist, in die elektrische Schaltung des Frequenzumrichters ein. Im Leistungsfluss 80 ist das erste wesentliche Bauteil die Spule 72. Von dort geht der Leistungsfluss 80 in den Gleichrichter 60 und die zugehörige Spule 76, welche der Blindstrom-Kompensation dient. Im Leistungsfluss 80 das nächste Wesentliche Bauteil ist ein Kondensator 86, welcher in dem Seitenteil des Elektronikgehäuses 8 gelegen ist, in welchem auch die Spule 76 angeordnet ist. Der Kondensator 86 liegt in axialer Richtung gesehen neben der Spule 76. Von dort geht der Leistungsfluss zu dem Wechselrichter 58 und von dort in die elektrischen Anschlussleitungen 12, welche durch die Öffnung 16 zu dem Stator 2 führen.

Durch die vorangehend beschrieben Ausgestaltung des Unterteils 8a des Elektronikgehäuses 8 wird ein optimales Wärmemanagement für die wärmeerzeugenden Bauteile im Inneren des Elektronikgehäuses 8 erzeugt. Besondere Bedeutung kommt dabei der gewinkelten Ausrichtung der Kühlrippen 56 und 54 an der dem Statorgehäuse 2 zugewandten Unterseite des Unterteils 8a des Elektronikgehäuses 8 zu. Die Wandungsabschnitt, an denen die Kühlrippen 54 und 56 ausgebildet sind, schließen dabei in axialer Richtung aneinander an und sind einstückig ausgebildet. So können alle wärmeleitenden Bauteil sehr einfach einstückig mit dem gesamten Unterteil 8a als Gussbauteil ausgebildet werden. In dem hier gezeigten Beispiel sind die Kühlrippen 54 und 56 einstückig mit dem Unterteil 8a des Elektronikgehäuses 8 ausgebildet. Anstelle dieser Ausgestaltung könnte das Unterteil 8a des Elektronikgehäuses auch im Bereich der Kühlrippen 54 und/oder im Bereich der Kühlrippen 56 jeweils eine Ausnehmung aufweisen, in welche ein Wärmeverteiler eingesetzt ist, an welchem die Kühlrippen 54 und/oder 56 ausgebildet sind. Ein solcher Wärmeverteiler könnte dann im Inneren des Elektronikgehäuses 8 im Bereich der Kühlrippen 56 mit der Spule 72 oder im Bereich der Kühlrippen 54 mit im Wechselrichter 58 und/oder dem Gleichrichter 60 wärmeleitend verbunden sein. Dabei könnte ein solcher in einer Ausnehmung eingesetzter Wärmeverteiler nur für den Bereich der Kühlrippen 54 zusätzlich oder alternativ aber auch für den Bereich der Kühlrippen 56 ausgebildet sein. Sollten sowohl die Kühlrippen 54 als auch die Kühlrippen 56 an einem Wärmeverteiler angeordnet sein, könnten hierfür mehrere separate Wärmeverteiler oder auch ein gemeinsamer Wärmeverteiler Verwendung finden. Ein solcher Wärmeverteiler könnte aus Metall ausgebildet werden und insbesondere dann Verwendung finden, wenn das Unterteil 8a des Elektronikgehäuses 8 aus Kunststoff ausgebildet wird.

### Bezugszeic henliste

- 2: Statorgehäuse
- 4: Stator
- 6: Rotorwelle
- 8: Elektronikgehäuse
- 8a: Unterteile
- 8b: Deckel
- 10: Leiterplatte
- 12: elektrische Anschlussleitungen
- 14: Öffnung
- 16: Öffnung
- 18: Kabelkanal
- 18a: Seitenwandungen des Kabelkanals
- 18b: Stirnwände des Kabelkanals
- 20, 22: Axialseiten des Statorgehäuses 2
- 24: Lüfter
- 26: Deckel
- 28: Rohrabschnitt
- 30: Rastelement
- 32: Schraube
- 34: Anlagefläche
- 36: Wulst
- 38, 42: Kühlrippen
- 44: Befestigungsausnehmungen
- 46: Gewindelöcher
- 47: Laschen
- 48: Abdeckkappe
- 50: Aussparung
- 52: Lufteintrittsöffnungen
- 54, 56: Kühlrippen
- 58: Wechselrichter
- 60: Gleichrichter
- 70: Anlagefläche
- 72: Spule
- 74: Trennwand
- 76: Spule
- 78: Tasche
- 80: Leistungsfluss
- 82: Netzanschlussleitung
- 84: Kabeldurchführung
- 86: Kondensator

- X: Dreh- bzw. Längsachse
- A, B: Abschnitte des Elektronikgehäuses 8
- s: axiale Länge des Statorgehäuses
- e: axiale Länge des Elektronikgehäuses

## Patentansprüche

1. Elektromotor mit einem Statorgehäuse (2) und einem radialseitig zu diesem angeordneten Elektronikgehäuse (8), wobei das Statorgehäuse (2) in einer Umfangswandung eine erste Öffnung (14) und das Elektronikgehäuse (8) an einer dem Statorgehäuse (2) zugewandten Wandung eine zweite Öffnung (16) aufweist, durch welche sich elektrische Anschlussleitungen (12) aus dem Inneren des Erektronikgehäuses (8) in das Innere des Statorgehäuses (2) erstrecken,
wobei
die erste (14) und zweite Öffnung (16) in axialer Richtung (X) voneinander beabstandet sind und zwischen dem Statorgehäuse (2) und dem Elektronikgehäuse (8) ein die erste (14) und die zweite Öffnung (16) verbindender Anschlusskanal (18) ausgebildet ist, durch welchen sich die elektrischen Anschlussleitungen (12) von der ersten (14) zu der zweiten Öffnung (16) erstrecken, wobei am Außenumfang des Statorgehäuses und/oder an einer dem Statorgehäuse zugewandten Außenwand des Elektronikgehäuses (8) jeweils zwei in tangentialer Richtung voneinander beabstandete Rippen (18a) ausgebildet sind, welche zumindest Abschnitte von Seitenwandungen des Anschlusskanals (18) bilden, die beiden Rippen (18a) an beiden Axialenden über jeweils eine Stirnwand (18b) miteinander verbunden sind, sodass die Stirnwände und Seitenwandungen des Anschlusskanals, welche von den Rippen gebildet werden, einstückig ausgebildet sind und einen Rahmen bilden, welcher an seiner Unterseite von dem Statorgehäuse und an seiner Oberseite von dem Elektronikgehäuse verschlossen ist.

2. Elektromotor nach Anspruch 1, **dadurch gekennzeichnet, dass** sich die zwei beabstandeten Rippen in axialer Richtung (X) erstrecken.

3. Elektromotor nach Anspruch 1 oder 2, **dadurch gekennzeichnet, dass** sich die Rippen parallel zu zumindest einer am Statorgehäuse (2) oder am Elektronikgehäuse (8) ausgebildeten Kühlrippe (38; 56) erstrecken.

4. Elektromotor nach einem der vorangehenden Ansprüche, **dadurch gekennzeichnet, dass** die Rippen (18a) gleichzeitig die Funktion einer Kühlrippe haben.

5. Elektromotor nach einem der vorangehenden Ansprüche, **dadurch gekennzeichnet, dass** am Außenumfang des Statorgehäuses (2) und an einer dem Statorgehäuse (2) zugewandten Außenwand des Elektronikgehäuses (8) jeweils zumindest eine Rippe ausgebildet ist, wobei die Rippen einander derart gegenüberliegen, dass sie gemeinsam zumindest einen Abschnitt einer Wandung des Anschlusskanals (18) bilden.

6. Elektromotor nach einem der vorangehenden Ansprüche, **dadurch gekennzeichnet, dass** der Anschlusskanal (18) eine elektromagnetische Abschirmung bildet.

7. Elektromotor nach einem der vorangehenden Ansprüche, **dadurch gekennzeichnet, dass** im Inneren des Anschlusskanals (18) ein Einsatz aus Kunststoff angeordnet ist, in welchem die Anschlussleitungen (12) geführt sind.

8. Elektromotor nach einem der vorangehenden Ansprüche, **dadurch gekennzeichnet, dass** der Kabelkanal (18) als eine Rinne am Außenumfang des Statorgehäuses (2) oder an einer dem Statorgehäuse (2) zugewandten Außenwand des Elektronikgehäuses (8) ausgebildet ist, wobei die Rinne durch einen Deckel (26) verschlossen ist.

9. Elektromotor nach Anspruch 8, **dadurch gekennzeichnet, dass** an dem Deckel (26) ein zum Inneren des Anschlusskanals (18) geöffneter Rohrabschnitt (28) ausgebildet ist, welcher sich in die erste oder die zweite Öffnung (16) hinein erstreckt.

10. Elektromotor nach einem der vorangehenden Ansprüche, **dadurch gekennzeichnet, dass** der Anschlusskanal (18) durch zumindest eine zwischen dem Elektronikgehäuse (8) und dem Statorgehäuse angeordnete Dichtung (36) nach außen abgedichtet ist.

11. Elektromotor nach Anspruch 10, **dadurch gekennzeichnet, dass** die Dichtung (36) einstückig mit einem den Anschlusskanal (18) verschließenden Deckel (26) oder einem in dem Anschlusskanal (18) angeordneten Einsatz ausgebildet ist.

12. Pumpenaggregat mit einem Antriebsmotor, **dadurch gekennzeichnet, dass** der Antriebsmotor ein Elektromotor nach einem der vorangehenden Ansprüche ist.

## Claims

1. An electric motor with a stator housing (2) and with an electronics housing (8) which is arranged on the radial side to this, wherein the stator housing (2) in a peripheral wall comprises a first opening (14), and the electronics housing (8) at a wall facing the stator housing (2) comprises a second opening (16), through which openings electric connection leads (12) extend out of the inside of the electronics housing (8) into the inside of the stator housing (2), wherein
the first (14) and the second opening (16) are distanced to one another in the axial direction (X), and a connection channel (18) connecting the first (14) and the second opening (16) is formed between the stator housing (2) and the electronics housing (8), through which connection channel (18) the electrical connection leads (12) extend from the first (14) to the second opening (16), wherein in each case two ribs (18a) which are distanced to one another in the tangential direction and which form at least sections of side walls of the connection channel (18) are formed on the outer periphery of the stator housing and/or on an outer wall of the electronics housing (8) which faces the stator housing, the two ribs (18a) are connected to one another at both axial ends via an face-wall (18b) in each case, so that the face-walls and side walls of the connection channel which are formed by the ribs, are designed in a single-piece manner and form a frame which on a lower side is closed by the stator housing and on its upper side by the electronics housing.

2. An electric motor according to claim 1, **characterised in that** the two distanced ribs extend in the axial direction (X).

3. An electric motor according to claim 1 or 2, **characterised in that** the ribs extend parallel to at least one cooling rib (38;56) formed on the stator housing (2) or on the electronics housing (8).

4. An electric motor according to one of the preceding claims, **characterised in that** the ribs (18a) simultaneously have the function of a cooling rib.

5. An electric motor according to one of the preceding claims, **characterised in that** in each case at least one rib is formed on the outer periphery of the stator housing (2) and on an outer wall of the electronics housing (8) which faces the stator housing (2), wherein the ribs lie opposite one another in a manner such that together they form at least one section of a wall of the connection channel (18).

6. An electric motor according to one of the preceding claims, **characterised in that** the connection channel (18) forms an electromagnetic shielding.

7. An electric motor according to one of the preceding claims, **characterised in that** an insert of plastic, in which the connection leads (12) are led, is arranged in the inside of the connection channel (18).

8. An electric motor according to one of the preceding claims, **characterised in that** the cable channel (18) is designed as a channel on the outer periphery of the stator housing (2) or on an outer wall of the electronics housing (8) which faces the stator housing (2), wherein the channel is closed by a cover (26).

9. An electric motor according to claim 8, **characterised in that** a tube section (28) which is open to the inside of the connection channel (18) and which extends into the first or the second opening (16) is formed on the cover (26).

10. An electric motor according to one of the preceding claims, **characterised in that** the connection channel (18) is sealed to the outside by way of at least one seal (36) which is arranged between the electronics housing (8) and the stator housing.

11. An electric motor according to claim 10, **characterised in that** the seal (36) is designed as one piece with a cover (26) closing the connection channel (18) or with an insert arranged in the connection channel (18).

12. A pump assembly with a drive motor, **characterised in that** the drive motor is an electric motor according to one of the preceding claims.

## Revendications

1. Moteur électrique comprenant un carter de stator (2) et un boîtier électronique (8) disposé radialement à côté de celui-ci, le carter de stator (2) présentant une première ouverture (14) dans une paroi circonférentielle et le boîtier électronique (8) présentant une seconde ouverture (16) dans une paroi dirigée vers le carter de stator (2), ouvertures à travers lesquelles des conducteurs de connexion électrique (12) s'étendent de l'intérieur du boîtier électronique (8) jusque dans l'intérieur du carter de stator (2), dans lequel la première ouverture (14) et la seconde ouverture (16) sont espacées l'une de l'autre dans la direction axiale (X) et un canal de connexion (18) à travers lequel les conducteurs de connexion électrique (12) s'étendent de la première ouverture (14) à la seconde ouverture (16) est formé entre le carter de stator (2) et le boîtier électronique (8), et dans lequel, à la périphérie extérieure du carter de stator et/ou sur une paroi extérieure du boîtier électronique (8) qui est dirigée vers le carter de stator sont formées respectivement deux nervures (18a) espacées l'une de l'autre dans la direction tangentielle et qui forment au moins des segments de parois latérales du canal de connexion (18), les deux nervures (18a) étant reliées l'une l'autre à chacune des deux extrémités axiales par une paroi frontale (18b) respective, de sorte que les parois frontales et les parois latérales du canal de connexion qui sont formées par les nervures sont d'un seul tenant et forment un cadre qui est fermé par le carter de stator sur son côté inférieur et par le boîtier électronique sur son côté supérieur.

2. Moteur électrique selon la revendication 1, **caractérisé en ce que** les deux nervures espacées s'étendent dans la direction axiale (X).

3. Moteur électrique selon la revendication 1 ou 2, **caractérisé en ce que** les nervures s'étendent parallèlement à au moins une ailette de refroidissement (38 ; 56) formée sur le carter de stator (2) ou sur le boîtier électronique (8).

4. Moteur électrique selon l'une des revendications précédentes, **caractérisé en ce que** les nervures (18a) ont en même temps la fonction d'une ailette de refroidissement.

5. Moteur électrique selon l'une des revendications précédentes, **caractérisé en ce que**, sur la périphérie extérieure du carter de stator (2) et sur une paroi extérieure du boîtier électronique (8) qui est dirigée vers le carter de stator (2) est formée à chaque fois au moins une nervure, les nervures étant disposées face à face de telle sorte qu'elles forment ensemble au moins un segment d'une paroi du canal de connexion (18).

6. Moteur électrique selon l'une des revendications précédentes, **caractérisé en ce que** le canal de connexion (18) forme un blindage électromagnétique.

7. Moteur électrique selon l'une des revendications précédentes, **caractérisé en ce qu'**à l'intérieur du canal de connexion (18) est disposé un élément rapporté en matière plastique dans lequel les conducteurs de connexion (12) sont guidés.

8. Moteur électrique selon l'une des revendications précédentes, **caractérisé en ce que** le caniveau de câbles (18) est constitué par un caniveau formé sur la périphérie extérieure du carter de stator (2) ou sur une paroi extérieure du boîtier électronique (8) qui est dirigée vers le carter de stator (2), le caniveau étant fermé par un couvercle (26).

9. Moteur électrique selon la revendication 8, **caractérisé en ce que** sur le couvercle (26) est formé un tronçon de tube (28) ouvert sur l'intérieur du canal de connexion (18) et qui est engagé dans la première ou la seconde ouverture (16).

10. Moteur électrique selon l'une des revendications précédentes, **caractérisé en ce que** le canal de connexion (18) est hermétiquement fermé par rapport à l'extérieur par au moins une garniture d'étanchéité (36) disposée entre le boîtier électronique (8) et le carter de stator.

11. Moteur électrique selon la revendication 10, **caractérisé en ce que** la garniture d'étanchéité (36) est formée d'une seule pièce avec un couvercle (26) qui ferme le canal de connexion (18) ou avec un élément rapporté disposé dans le canal de connexion (18).

12. Groupe motopompe comprenant un moteur d'entraînement, **caractérisé en ce que** le moteur d'entraînement est un moteur électrique selon l'une des revendications précédentes.
